# EUROPEAN PATENT APPLICATION

(11) **EP 3 214 611 A1**
(43) Date of publication of application: **06.09.2017**
(21) Application number: 17155476.9
(22) Date of filing: 09.02.2017
(51) Int. Cl.: G08G 1/16, B60Q 1/50, B60Q 1/52

(54) **INFORMATION PROCESSING APPARATUS, INFORMATION PROCESSING METHOD, AND COMPUTER-READABLE MEDIUM**

(30) Priority: 03.03.2016 JP 2016040724
(71) Applicant: Kabushiki Kaisha Toshiba, Minato-ku Tokyo 105-8001 (JP)
(72) Inventor: Nishiyama, Manabu, Tokyo, Tokyo 105-8001 (JP); Sano, Yuma, Tokyo, Tokyo 105-8001 (JP); Sekine, Masahiro, Tokyo, Tokyo 105-8001 (JP); Tasaki, Tsuyoshi, Tokyo, Tokyo 105-8001 (JP)
(74) Representative: Moreland, David

(57) **Abstract**

According to an arrangement, an information processing apparatus (10) includes a first acquirer (12A), a second acquirer (12B), a detector (12D), a determiner (12E), and an updater (12F). The first acquirer (12A) is configured to acquire a previous output message from a moving object (18). The second acquirer (12B) is configured to acquire surrounding information of the moving object (18). The detector (12D) is configured to detect motion information indicating a motion of an object (20) as a destination of the message based on the surrounding information. The determiner (12E) is configured to determine whether the motion of the object (20) indicated by the motion information corresponds to a motion indicated by the message. The updater (12F) is configured to update the message based on the motion information when the motion of the object (20) is determined not to correspond to the motion indicated by the message.

## Description

### FIELD

The present disclosure relates to an information processing apparatus, an information processing method, and a computer-readable medium.

### BACKGROUND

An apparatus that outputs a message from a vehicle to an object such as another vehicle or a pedestrian is known.

However, in the known apparatus, a message is merely output from a moving object such as a vehicle and the message cannot be corrected depending on a motion of an object as a notification destination.

### BRIEF DESCRIPTION OF THE DRAWINGS

FIG. 1 is a schematic diagram illustrating an example of an information processing apparatus;
FIG. 2 is a schematic diagram illustrating an example of a usage mode of the information processing apparatus;
FIG. 3 is a block diagram illustrating an example of a functional configuration of the information processing apparatus;
FIGS. 4A and 4B are schematic diagrams illustrating an example of data structures of message management information and previous output information;
FIG. 5 is a diagram illustrating an example of a state in which a message is notified;
FIG. 6 is a diagram illustrating an example of a state in which a message is notified;
FIGS. 7A and 7B are diagrams illustrating an example of a state in which a message is notified;
FIG. 8 is a flowchart illustrating an example of an information processing flow;
FIG. 9 is a block diagram illustrating an example of a functional configuration of the information processing apparatus;
FIG. 10 is a schematic diagram illustrating an example of a data structure of message management information;
FIG. 11 is a flowchart illustrating an example of an information processing flow; and
FIG. 12 is a block diagram illustrating an example of a hardware configuration.

### DETAILED DESCRIPTION

According to an arrangement, an information processing apparatus includes a first acquirer, a second acquirer, a detector, a determiner, and an updater. The first acquirer is configured to acquire a previous output message from a moving object. The second acquirer is configured to acquire surrounding information of the moving object. The detector is configured to detect motion information indicating a motion of an object as a destination of the message based on the surrounding information. The determiner is configured to determine whether the motion of the object indicated by the motion information corresponds to a motion indicated by the message. The updater is configured to update the message based on the motion information when the motion of the object indicated by the motion information is determined not to correspond to the motion indicated by the message.

Hereinafter, arrangements according to the present invention will be described in detail with reference to the accompanying drawings.

### First Arrangement

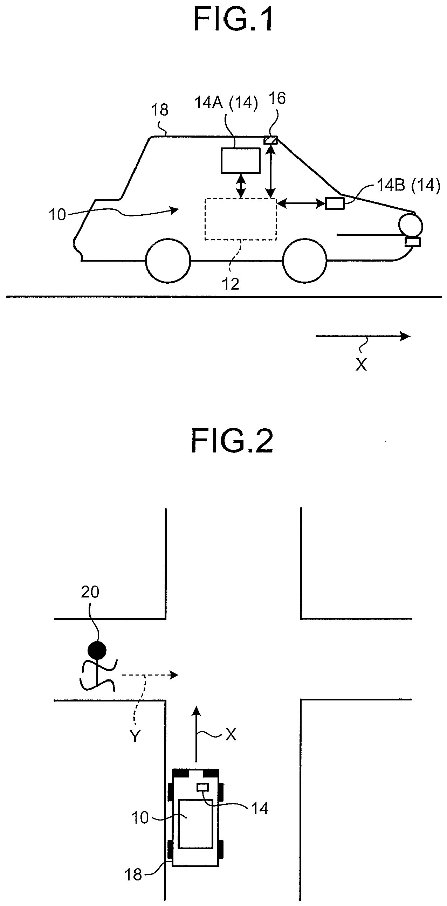

FIG. 1 is a schematic diagram illustrating an example of an information processing apparatus 10. The information processing apparatus 10 is mounted in, for example, a moving object.

A moving object is movable. Examples of the moving object include a vehicle 18 and a carriage. In this arrangement, it is assumed that the moving object is a vehicle 18. The vehicle 18 is, for example, a two-wheeled vehicle, a three-wheeled vehicle, or a four-wheeled vehicle. In this arrangement, it is assumed that the vehicle 18 is a four-wheeled vehicle.

The information processing apparatus 10 outputs a message to an object. The object is movable. Examples of the object include a living thing (such as a person or an animal), a vehicle, and a carriage. Examples of the object includes a person (for example, a driver) riding on a movable thing (for example, a vehicle).

A message is data which the information processing apparatus 10 outputs to the outside. Examples of the message include image data and sound data. In this arrangement, the message intends to avoid collision of the vehicle 18 with an object or congestion due to stopping of both the vehicle 18 and the object.

FIG. 2 is a schematic diagram illustrating an example of a usage mode of the information processing apparatus 10 according to this arrangement.

For example, it is assumed that the vehicle 18 having the information processing apparatus 10 mounted thereon moves in a moving direction X and an object 20 such as a person crosses a road in a direction in which the object crosses the moving direction X of the vehicle 18 (moving direction Y). The information processing apparatus 10 outputs a message to the object 20.

Referring back to FIG. 1, description will be continued. The information processing apparatus 10 includes a controller 12, an output unit 14, and a sensor 16. The controller 12, the output unit 14, and the sensor 16 are connected to each other so as to transmit and receive data or signals.

The output unit 14 outputs a message. The output unit 14 has at least one of a display function of displaying an image and a sound output function of outputting sound. For example, the output unit 14 includes a display 14A and a sound output unit 14B.

The display 14A displays a message. The display 14A is, for example, a known liquid crystal display (LCD) or a projection device. The display 14A is disposed at a position at which a displayed message can be watched from the outside of the vehicle 18. For example, the display 14A is disposed on a side surface of the vehicle 18 (for example, in the vicinity of a door glass), a front panel of the vehicle 18, or the like. The sound output unit 14B outputs sound indicating a message to the outside of the vehicle 18. The sound output unit 14B is, for example, a known speaker. The sound output unit 14B has only to be disposed at a position at which sound can be output to the outside of the vehicle 18.

The output unit 14 may be configured as an independent body from the information processing apparatus 10. That is, the output unit 14 may be mounted on the vehicle 18 and the information processing apparatus 10 may be mounted on a server installed in a monitoring company or the like. In this case, the output unit 14 and the information processing apparatus 10 can be connected to communicate with each other by known radio communication or the like.

The sensor 16 detects surrounding information of the vehicle 18. The sensor 16 is, for example, an imaging device that acquires image data by capturing an image, a millimeter wave radar, or a laser sensor.

The surrounding information of the vehicle 18 is information indicating a surrounding situation of the vehicle 18. The surrounding of the vehicle 18 is an area within a predetermined range from the vehicle 18. This range can be set in advance. This range is, for example, a range within 10 m or less from the vehicle 18 or a range within 5 m or less from the vehicle.

The surrounding information of the vehicle 18 is image data when the sensor 16 is an imaging device. When the sensor 16 is a millimeter wave radar or a laser sensor, the surrounding information of the vehicle 18 is distance information.

The sensor 16 may be configured as an independent body from the information processing apparatus 10. For example, an imaging device, a millimeter wave radar, or a laser sensor installed in another vehicle 18 may be used as the sensor 16. For example, an imaging device, a millimeter wave radar, or a laser sensor installed in a road or a building may be used as the sensor 16. In this case, the information processing apparatus 10 can receive surrounding information from the sensor 16 by radio communication.

In this arrangement, it is assumed that the sensor 16 is an imaging device. Accordingly, in this arrangement, the surrounding information sensed by the sensor 16 is image data surrounding (particularly, in front of) the vehicle 18.

The controller 12 controls the information processing apparatus 10.

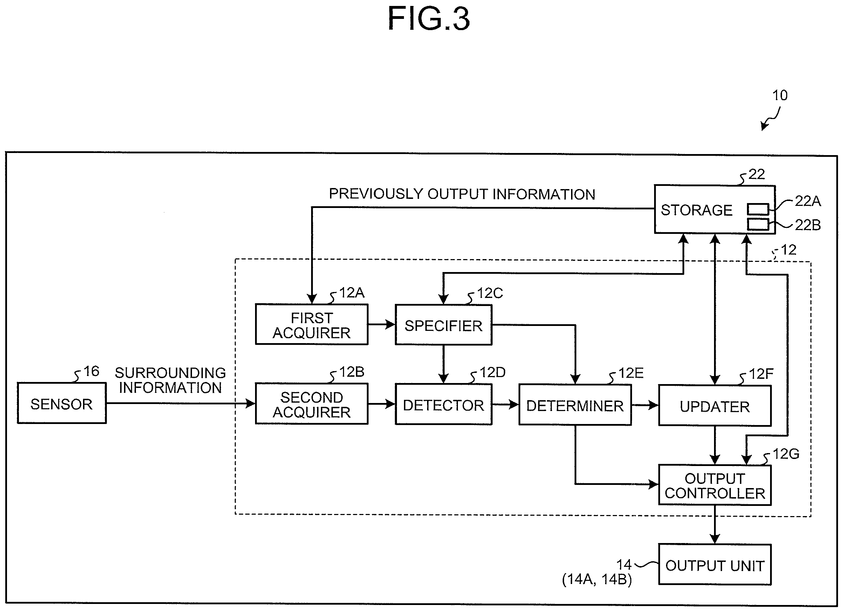

FIG. 3 is a block diagram illustrating an example of a functional configuration of the information processing apparatus 10 according to this arrangement.

The information processing apparatus 10 includes a controller 12, a storage 22, an output unit 14, and a sensor 16. The storage 22, the output unit 14, and the sensor 16 are connected to the controller 12 so as to transmit and receive data or signals to and from the controller 12.

The storage 22 stores a variety of data. The storage 22 is a storage medium such as a known hard disk. In this arrangement, the storage 22 stores message management information 22A and previous output information 22B.

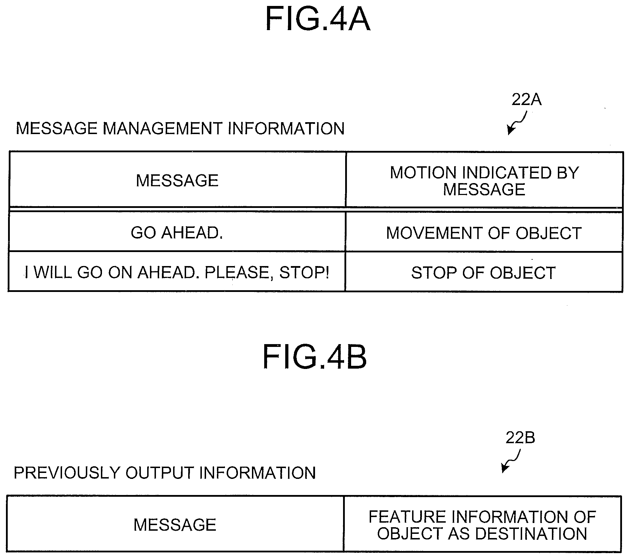

FIGS. 4A and 4B are schematic diagrams illustrating an example of data structures of the message management information 22A and the previous output information 22B.

FIG. 4A is a schematic diagram illustrating an example of a data structure of the message management information 22A. In the message management information 22A, a message and a motion indicated by the message are correlated with each other. Examples of the message include "Go ahead" and "I will go on ahead. Please, stop!".

A motion indicated by a message in the message management information 22A is information indicating a motion of an object 20 indicated by the corresponding message. Specifically, a motion of the object 20 indicated by a message is a motion indicating movement or stop of the object 20.

For example, a motion indicated by the message "Go ahead" is "movement of an object 20". For example, a motion indicated by the message "I will go on ahead. Please, stop!" is "stop of an object 20".

The messages illustrated in FIG. 4A and motions indicated by the messages are merely examples and are not limited to the examples illustrated in FIG. 4A.

The previous output information 22B will be described below. FIG. 4B is a schematic diagram illustrating an example of a data structure of the previous output information 22B. The previous output information 22B is information indicating a message that is previously output from the information processing apparatus 10. Accordingly, the previous output information 22B in the storage 22 is overwritten by the controller 12 whenever a new message is output from the output unit 14.

The previous output information 22B includes a message and feature information of an object 20 as a destination. The feature information of an object 20 as a destination is information that can specify the object 20 from the surrounding information.

That is, when the sensor 16 is an imaging device, the feature information is information that can specify the object 20 from image data as the surrounding information. Specifically, examples of the feature information include a color and a shape of the object 20.

Referring to FIG. 3, description will be continued. The controller 12 includes a first acquirer 12A, a second acquirer 12B, a specifier 12C, a detector 12D, a determiner 12E, an updater 12F, and an output controller 12G. A part or all of the first acquirer 12A, the second acquirer 12B, the specifier 12C, the detector 12D, the determiner 12E, the updater 12F, and the output controller 12G may be embodied by causing a processor such as a CPU to execute a program, that is, by software, may be embodied by hardware such as an integrated circuit (IC), or may be embodied by use of both software and hardware.

The first acquirer 12A acquires a message which is previously output from the vehicle 18. In this arrangement, the first acquirer 12A reads the previous output information 22B from the storage 22. The first acquirer 12A acquires the message which is previously output from the vehicle 18 by reading the message included in the previous output information 22B.

The specifier 12C specifies a motion indicated by the message acquired by the first acquirer 12A. The specifier 12C reads the motion indicated by the message acquired by the first acquirer 12A from the message management information 22A. By this reading process, the specifier 12C specifies the motion indicated by the message. The specifier 12C extracts feature information of the object 20 as a destination of the message. The specifier 12C extracts the feature information by reading the feature information of the object 20 as a destination which is included in the previous output information 22B acquired by the first acquirer 12A.

On the other hand, the second acquirer 12B acquires surrounding information of the vehicle 18 from the sensor 16. As described above, in this arrangement, the second acquirer 12B acquires image data of the surrounding of the vehicle 18 as the surrounding information of the vehicle 18.

The detector 12D detects motion information indicating a motion of the object 20 as a destination of a message on the basis of the surrounding information acquired by the second acquirer 12B. A motion of the object 20 means a motion of the object 20 after the message is previously output.

The motion information includes at least one of moving direction information indicating a moving direction of an object 20, moving distance information indicating a moving distance of the object 20, moving speed information indicating a moving speed of the object 20, and a scheduled moving path of the object 20. The moving distance of the object 20 indicates a moving distance of the object 20 after the message is previously output. The moving speed of the object 20 indicates a moving speed of the object 20 after the message is previously output. The moving direction of the object 20 indicates a moving direction of the object 20 after the message is previously output. The scheduled moving path of the object 20 indicates a scheduled path through which the object 20 will move from now.

Specifically, the detector 12D acquires feature information of the object 20 as a destination of the previously output message from the specifier 12C. The detector 12D detects the object 20 indicated by the feature information from the image data as the surrounding information. Accordingly, the detector 12D detects motion information indicating a motion of the object 20.

Specifically, the detector 12D acquires time-series surrounding information after the message is previously output from the second acquirer 12B. That is, the detector 12D acquires a plurality of pieces of time-series image data which are acquired by the sensor 16 after the message is previously output. The detector 12D detects the object 20 indicated by the feature information from images of the plurality of pieces of image data. The detector 12D detects the motion information indicating the motion of the object 20 after the message is previously output on the basis of the positions or shapes or the like of the object 20 detected from the images.

The detector 12D can detect motion information indicating the motion of the object 20 using a known method.

For example, the detector 12D can detect the motion information of the object 20 using a pattern recognizing process. Specifically, the detector 12D detects an object 20 from image data using the pattern recognizing process. For example, the detector 12D holds a discriminator having learned for discriminating an object 20 in advance. The detector 12D can detect the object 20 from the image data (surrounding information) using the discriminator.

In this case, histograms of oriented gradients (HOG), co-occurrence histograms of oriented gradients (CoHOG), or the like can be used as the feature information. The feature information is not limited thereto. Known methods can be used as a method of detecting an object 20 from the image data (surrounding information) using the feature information. For example, the detector 12D can use a method such as linear support vector machine (SVM).

The first acquirer 12A may acquire the previous output information 22B including the previously output message, the feature information of the object 20 as a destination, and position information of the object 20 in the image data (surrounding information). The detector 12D may define a pattern recognition processing range in an image of the image data (surrounding information) using the position information and may detect an object 20 while narrowing down the object 20 to be detected.

In this way, the detector 12D detects the object 20 indicated by the feature information in the images of the plurality of pieces of image data. The detector 12D detects motion information indicating a motion of the object 20 after the message is previously output from the positions or shapes of the object 20 detected from the images.

For example, the detector 12D detects a moving distance of the object 20, a moving direction of the object 20, a scheduled moving path of the object 20, and the like using a known tracking process.

Specifically, the detector 12D detects the positions of the object 20 from the plurality of pieces of image data (surrounding information) acquired in time series. The detector 12D detects the motion information (the moving distance, the moving direction, and the scheduled moving path) indicating the motion of the object 20 from the positions of the object 20 in the pieces of time-series image data.

The detector 12D sets an image pattern indicated by the feature information of the object 20 as a destination which has been once detected as a template. Then, the detector 12D may perform a tracking process such as template matching on the images of the plurality of pieces of image data which are acquired in time series. By this tracking process, the detector 12D may detect the motion information.

The detector 12D may analyze a motion distribution (optical flow) in the images of the plurality of pieces of image data which are acquired at different times. In this case, the detector 12D can detect the motion information of an object 20 by determining whether there is an object 20 indicating a motion different from other backgrounds.

The detector 12D may detect motion information by detecting a position of an object 20 using a technique (for example, convolutional neural network) of learning extraction of feature information from surrounding information and identification of an object 20 at a time and acquiring a variation in time series thereof.

When the sensor 16 is a distance sensor such as a millimeter wave radar or a laser sensor and the surrounding information is distance information, the detector 12D can detect motion information using a known method.

For example, the detector 12D clusters points included in the distance information into a plurality of clusters including a group of points having a relationship of a similar distance. The detector 12D specifies a cluster corresponding to the position of the object 20 acquired by the feature information specified by the specifier 12C. The detector 12D calculates a moving distance or a moving direction of the cluster using a known method by performing the clustering on the plurality of pieces of time-series distance information in the same way. By this process, the detector 12D can detect the motion information such as the moving distance or the moving direction of the object 20.

The detector 12D may use any method to detect the motion information and is not limited to the above-mentioned methods.

The sensor 16, the second acquirer 12B, and the detector 12D may be configured independently of the information processing apparatus 10. In this case, the information processing apparatus 10 can receive a detection result of motion information from the external detector 12D configured independently of the information processing apparatus 10.

The determiner 12E determines whether the motion of the object 20 indicated by the motion information detected by the detector 12D corresponds to a motion indicated by a message previously output from the vehicle 18.

For example, the determiner 12E acquires the previously output message acquired by the first acquirer 12A. The determiner 12E reads the motion indicated by the message from the message management information 22A. The determiner 12E determines whether the detected motion corresponds to the motion indicated by the motion information detected by the detector 12D. Accordingly, the determiner 12E determines whether the motion of the object 20 indicated by the motion information detected by the detector 12D corresponds to the motion indicated by the message previously output from the vehicle 18.

For example, it is assumed that the previously output message is "Go ahead". It is assumed that the motion indicated by the message is "movement of the object 20" (see FIG. 4A). It is assumed that the motion indicated by the motion information detected by the detector 12D is movement of the object 20. In this case, the determiner 12E determines that both motions correspond to each other. On the other hand, it is assumed that the motion indicated by the motion information detected by the detector 12D is stop of the object 20. In this case, the determiner 12E determines that both motions do not correspond to each other.

For example, it is assumed that the previously output message is "I will go on ahead. Please, stop!". It is assumed that the motion indicated by the message is "stop of the object 20" (see FIG. 4A). It is also assumed that the motion indicated by the motion information detected by the detector 12D is stop of the object 20. In this case, the determiner 12E determines that both motions correspond to each other. On the other hand, it is assumed that the motion indicated by the motion information detected by the detector 12D is movement of the object 20. In this case, the determiner 12E determines that both motions do not correspond to each other.

The determiner 12E may determine whether both motions correspond to each other using the following method.

For example, it is assumed that the motion indicated by the previously output message is a motion indicating movement of the object 20. That is, it is assumed that the specifier 12C specifies a motion indicating movement of the object 20 as the motion indicated by the previously output message.

In this case, the detector 12D detects motion information including moving distance information indicating a moving distance of the object 20 from the surrounding information. Then, the determiner 12E determines that the motion of the object 20 indicated by the motion information corresponds to the motion indicated by the previously output message when the moving distance indicated by the moving distance information is equal to or greater than a first threshold value. An arbitrary threshold value capable of determining movement of the object 20 can be set in advance as the first threshold value.

For example, it is assumed that the motion indicated by the previously output message is a motion indicating stop of the object 20. That is, it is assumed that the specifier 12C specifies a motion indicating stop of the object 20 as the motion indicated by the previously output message.

In this case, the detector 12D detects the motion information including the moving distance information indicating the moving distance of the object 20 from the surrounding information. Then, the determiner 12E determines that the motion of the object 20 indicated by the motion information corresponds to the motion indicated by the previously output message when the moving distance indicated by the moving distance information is less than the first threshold value. The first threshold value is the same as described above.

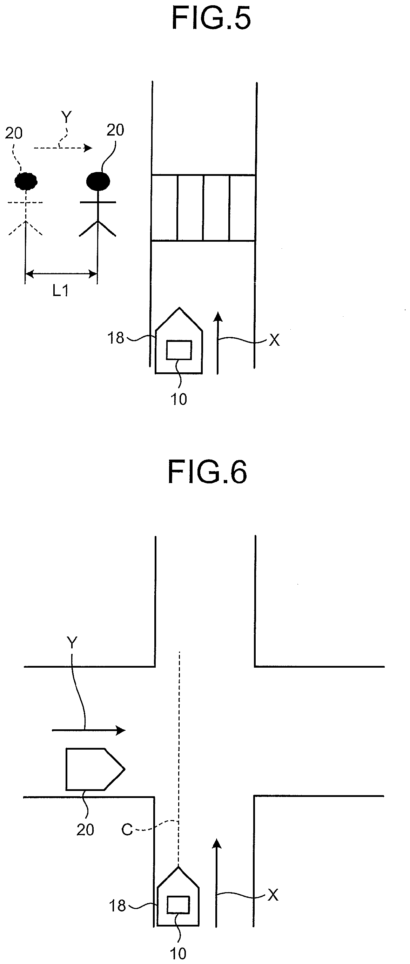

FIG. 5 is a diagram illustrating an example of a state in which a message is notified. For example, it is assumed that the vehicle 18 having the information processing apparatus 10 mounted thereon moves on a road in the moving direction X. It is assumed that an object 20 (person) intending to cross the road is present on a sidewalk in front of the vehicle 18.

At this time, for example, it is assumed that a message is output by the information processing apparatus 10. A message which is determined by a known method can be used as a message which is first output. For example, the first output message can be a message based on a user's operation instruction. The first output message may be a message which is automatically determined by the information processing apparatus 10 on the basis of the traveling state of the vehicle 18.

It is assumed that the message previously output from the vehicle 18 by the information processing apparatus 10 is a message indicating movement of the object 20 "Go ahead".

In this case, the detector 12D detects motion information including moving distance information indicating a moving distance L1 of the object 20. Then, the determiner 12E determines that the motion of the object 20 corresponds to the motion indicated by the previously output message when the moving distance L1 is equal to or greater than the first threshold value. In this case, the determiner 12E determines that both motions do not correspond to each other when the moving distance L1 is less than the first threshold value.

At this time, the detector 12D may determine that the motion of the object 20 corresponds to the motion indicated by the previously output message when the moving distance L1 is equal to or greater than the first threshold value and the moving direction of the object 20 is the same as the moving direction indicated by the previously output message. In this case, the determiner 12E may determine that both motions do not correspond to each other when the moving distance L1 is less than the first threshold value or when the moving direction of the object 20 is different from the moving direction indicated by the previously output message. In this case, information indicating the moving direction of the object 20 may be registered in advance as the motion of the object 20 indicated by the message in the message management information 22A (FIG. 4A).

By allowing the determiner 12E to additionally determine the moving direction, it is possible to more accurately determine that the object 20 does an unintentional motion.

On the other hand, it is assumed that the motion indicated by the previously output message is a motion indicating stop of the object 20. Specifically, it is assumed that the message previously output from the vehicle 18 by the information processing apparatus 10 is a message indicating stop of the object 20 "I will go on ahead. Please, stop!".

In this case, the detector 12D detects the motion information including the moving distance information indicating the moving distance L1 of the object 20 from the surrounding information. Then, the determiner 12E determines that the motion of the object 20 corresponds to the motion indicated by the previously output message when the moving distance L1 is less than the first threshold value. In this case, the determiner 12E determines that both motions do not correspond to each other when the moving distance L1 is equal to or greater than the first threshold value.

The determiner 12E may determine whether both motions correspond to each other using another method.

For example, it is assumed that the motion indicated by the previously output message is a motion indicating movement of the object 20. That is, it is assumed that the specifier 12C specifies the motion indicating movement of the object 20 as the motion indicated by the previously output message.

In this case, the detector 12D detects the motion information including the moving direction information including the moving direction of the object 20 from the surrounding information. The detector 12D detects a scheduled moving path of the vehicle 18. The scheduled moving path of the vehicle 18 indicates a path on which the vehicle 18 is scheduled to move from now. The detector 12D can acquire the scheduled moving path from a vehicle controller that controls the vehicle 18. The detector 12D may acquire information indicating the moving speed, the moving direction, or the like of the current vehicle 18 from the vehicle controller, and may calculate the scheduled moving path from the acquired information using a known method.

The determiner 12E determines that the motion of the object 20 indicated by the motion information corresponds to the motion indicated by the message when the moving direction of the object 20 indicated by the moving direction information crosses the scheduled moving path of the vehicle 18.

FIG. 6 is a diagram illustrating an example of a state in which a message is notified. For example, it is assumed that the vehicle 18 moves on a road in the moving direction X. It is assumed that the scheduled moving path of the vehicle 18 is a scheduled moving path C in FIG. 6. It is assumed that an object 20 (vehicle) intending to enter a crossroad is present at the crossroad in front of the vehicle 18.

At this time, it is assumed that a message is output by the information processing apparatus 10. It is assumed that the message previously output from the vehicle 18 by the information processing apparatus 10 is the message indicating movement of the object 20 "Go ahead". In this case, the detector 12D detects the motion information including the moving direction information indicating the moving direction Y of the object 20 from the surrounding information. The detector 12D detects a scheduled moving path C of the vehicle 18.

The determiner 12E determines that the motion of the object 20 indicated by the motion information corresponds to the motion indicated by the message when the moving direction Y of the object 20 crosses the scheduled moving path C of the vehicle 18. In this case, the determiner 12E determines that both motions do not correspond to each other when the moving direction Y of the object 20 does not cross the scheduled moving path C of the vehicle 18.

On the other hand, it is assumed that the motion indicated by the previously output message is a motion indicating stop of the object 20. Specifically, it is assumed that the message previously output from the vehicle 18 by the information processing apparatus 10 is the message indicating stop of the object 20 "I will go on ahead. Please, stop!".

In this case, when the object 20 stops, the moving direction Y of the object 20 is not detected by the detector 12D. Accordingly, in this case, the moving direction Y of the object 20 does not cross the scheduled moving path C of the vehicle 18. Accordingly, the determiner 12E determines that the motion of the object 20 indicated by the motion information corresponds to the motion indicated by the message when the moving direction Y of the object 20 does not cross the scheduled moving path C of the vehicle 18. In this case, the determiner 12E determines that both motions do not correspond to each other when the moving direction Y of the object 20 crosses the scheduled moving path C of the vehicle 18.

The determiner 12E may determine whether both motions correspond to each other using the following method.

For example, the detector 12D detects the motion information including moving direction information (first direction information) indicating the moving direction of the object 20 and first speed information indicating the moving speed of the object 20 from the surrounding information. The detector 12D detects second direction information indicating a moving direction of the vehicle 18 and second speed information indicating a moving speed of the vehicle 18. The detector 12D can acquire the second direction information and the second speed information from the vehicle controller that controls the vehicle 18.

The detector 12D additionally detects a first scheduled moving path when the object 20 continues to move in the moving direction indicated by the first direction information at the moving speed indicated by the first speed information. The detector 12D detects a second scheduled moving path when the vehicle 18 continues to move in the moving direction indicated by the second direction information at the moving speed indicated by the second speed information.

The determiner 12E determines that the motion of the object 20 indicated by the motion information corresponds to the motion indicated by the message when all distances between points indicated by the first scheduled moving path and points indicated by the second scheduled moving path which correspond to the same timing are equal to or greater than a second threshold value.

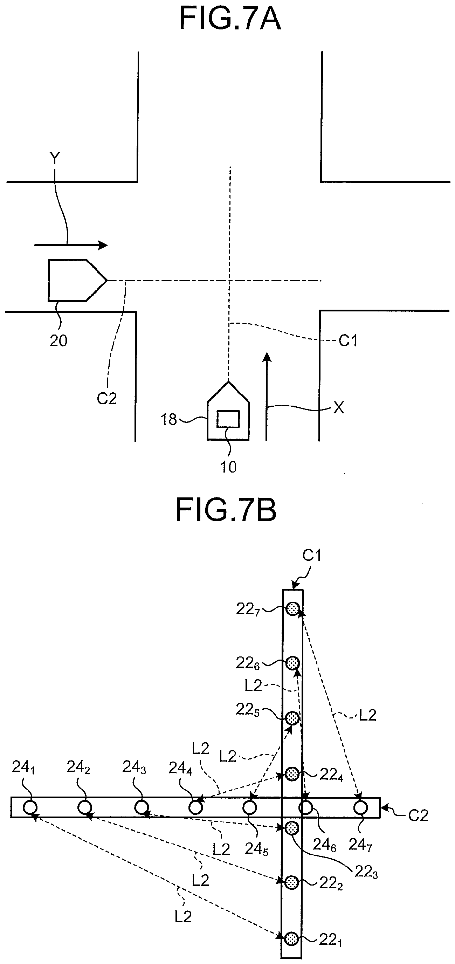

FIGS. 7A and 7B are diagrams illustrating a state in which a message is notified. For example, it is assumed that the vehicle 18 moves on a road in the moving direction X. It is assumed that the first scheduled moving path which is the scheduled moving path of the vehicle 18 is a first scheduled moving path C1 in FIGS. 7A and 7B. It is assumed that an object 20 (vehicle) intending to enter a crossroad is present at the crossroad in front of the vehicle 18. It is assumed that the scheduled moving path of the object 20 is a second scheduled moving path C2 in FIGS. 7A and 7B.

At this time, the determiner 12E determines that the motion of the object 20 indicated by the motion information corresponds to the motion indicated by the message when all distances between points constituting the first scheduled moving path C1 and points constituting the second scheduled moving path C2 which correspond to the same timing are equal to or greater than the second threshold value.

Specifically, it is assumed that the first scheduled moving path C1 and the second scheduled moving path C2 exhibit the relationship illustrated in FIG. 7B. A plurality of points 22₁ to 22₇ constituting the first scheduled moving path C1 and a plurality of points 24₁ to 24₇ constituting the second scheduled moving path C2 indicate positions of the vehicle 18 and the object 20 at the same timings (the same times).

The determiner 12E can determine that the motion of the object 20 indicated by the motion information corresponds to the motion indicated by the message when all distances L2 between the points at the same timing are equal to or greater than a second threshold value. In this case, the determiner 12E can determine that both motions do not correspond to each other when at least one of the distances L2 between the points at the same timing is less than the second threshold value.

When the determination is performed using the distances L2 between the points at the same timing, the motion indicated by the previously output message which serves as a basis for determination of the determiner 12E may be arbitrary. That is, the motion indicated by the previously output message which serves as a basis for determination of the determiner 12E may be movement or stop of the object 20 or the vehicle 18.

By causing the determiner 12E to additionally determine the scheduled moving path, it is possible to more accurately determine that the object 20 makes an unintentional motion.

When the object 20 as a destination is a pedestrian, the detector 12D may additionally detect a pedestrian's face direction. The detector 12D may additionally detect a face direction of a person (such as a driver) riding on a vehicle or a bicycle which is the object 20 as a destination.

The determiner 12E may determine that both motions do not correspond to each other when a variation of the detected face direction is different from a variation corresponding to the motion indicated by the previously output message. The determiner 12E can determine that both motions correspond to each other when a variation of the detected face direction corresponds to the variation corresponding to the motion indicated by the previously output message. For example, when the variation of the face direction of the object 20 faces the vehicle 18 side and then faces the downstream side in the moving direction Y of the object 20, the detector 12D can detect the motion information indicating movement of the object 20.

In this case, information indicating variations in face directions of persons can be registered in advance in correlation with the messages in the message management information 22A.

The detector 12D may additionally detect signaling which is conventionally performed between vehicles in passing a road. For example, when a certain vehicle makes a certain motion, another vehicle accepting this motion may perform signaling by blinking a headlight. A signal indicating the signaling is stored as a signal indicating acceptance in the storage 22 in advance.

The determiner 12E may determine that both motions correspond to each other when the sensor 16 detects the signal indicating the signaling after a message is previously output.

Referring to FIG. 3 again, description will be continued. When the determiner 12E determines that both motions do not correspond to each other, the updater 12F updates the previously output message on the basis of the motion information of the object 20 detected by the detector 12D.

Specifically, when it is determined that both motions do not correspond to each other, the updater 12F updates the previously output message to avoid at least one of collision of the object 20 and the moving object 18 and stopping of both the object 20 and the moving object 18 on the basis of the motion of the object 20 indicated by the motion information detected by the detector 12D.

For example, when the motion indicated by the previously output message indicates movement or stop of the object 20 and it is determined that both motions do not correspond to each other, the updater 12F updates the previously output message to a message indicating that the vehicle 18 makes the motion of the object 20 indicated by the previously output message.

Specifically, it is assumed that the previously output message is "Go ahead" and the motion indicated by the message is "movement of the object 20". It is assumed that the determiner 12E determines that both motions do not correspond to each other. In this case, the object 20 does not move, that is, stops. Accordingly, the updater 12F updates the previously output message to, for example, a message indicating that the motion indicated by the message is "movement of the vehicle 18 (that is, stop of the object 20)". For example, the updater 12F updates the previously output message "Go ahead" to the message indicating movement of the vehicle 18 "I will go on ahead. Please, stop!".

It is assumed that the previously output message is "I will go on ahead. Please, stop!" and the motion indicated by the message is "stop of the object 20". It is assumed that the determiner 12E determines that both motions do not correspond to each other. In this case, the object 20 moves. Accordingly, the updater 12F updates the previously output message to, for example, a message indicating that the motion indicated by the message is "stop of the vehicle 18 (that is, movement of the object 20)". For example, the updater 12F updates the previously output message "I will go on ahead. Please, stop!" to the message indicating stop of the vehicle 18 "Go ahead".

The updater 12F outputs the updated message to the output controller 12G. The output controller 12G receives the determination result (corresponding or non-corresponding) from the determiner 12E. The output controller 12G receives the updated message from the updater 12F.

When the determiner 12E determines that both motions correspond to each other, the output controller 12G reads the previous output information 22B in the storage 22. The output controller 12G controls the output unit 14 so as to output a message in the previous output information 22B. The output unit 14 outputs at least one of an image indicating the message and a voice indicating the message. Accordingly, when the determiner 12E determines that both motions correspond to each other, the output unit 14 outputs the previously output message without any change.

On the other hand, when the determiner 12E determines that both motions do not correspond to each other, the output controller 12G reads the updated message received from the updater 12F. The output controller 12G controls the output unit 14 so as to output the updated message. The output unit 14 outputs at least one of an image indicating the message and a voice indicating the message. Accordingly, when the determiner 12E determines that both motions do not correspond to each other, the output unit 14 outputs the message updated by the updater 12F.

The output controller 12G overwrites the previous output information 22B in the storage 22 with the output message whenever performing control to output a message. At this time, the output controller 12G registers the feature information previously extracted by the specifier 12C in the previous output information 22B. Accordingly, the previous output information 22B in the storage 22 is overwritten. That is, the previously output message is normally registered in the previous output information 22B.

In this way, when the determiner 12E determines that both motions do not correspond to each other, the updater 12F updates the message on the basis of the motion information of the object 20. Accordingly, the updater 12F can update the message on the basis of the motion of the object 20 as a destination.

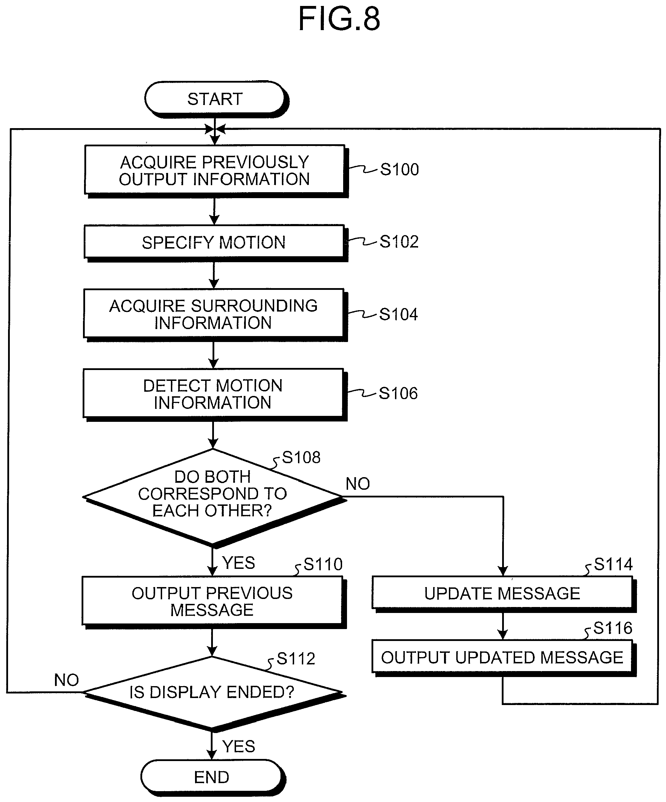

An example of an information processing flow which is performed by the controller 12 of the information processing apparatus 10 will be described below. FIG. 8 is a flowchart illustrating an example of the information processing flow which is performed by the controller 12 of the information processing apparatus 10.

First, the first acquirer 12A acquires previous output information (Step S100). By the process of Step S100, the first acquirer 12A acquires a previously output message.

Then, the specifier 12C specifies a motion indicated by the message acquired in Step S100 (Step S102). In Step S102, the specifier 12C extracts feature information of an object 20 as a destination of the message acquired in Step S100.

Then, the second acquirer 12B acquires surrounding information of the vehicle 18 from the sensor 16 (Step S104).

Then, the detector 12D detects motion information indicating the motion of the object 20 as a destination of the message acquired in Step S100 on the basis of the surrounding information acquired in Step S104 (Step S106).

Then, the determiner 12E determines whether the motion of the object 20 indicated by the motion information detected in Step S106 corresponds to the motion indicated by the previously output message acquired in Step S100 (Step S108).

When it is determined in Step S108 that both motions correspond to each other (YES in Step S108), the flow moves to Step S110. In Step S110, the output controller 12G controls the output unit 14 so as to output the previously output message (Step S110).

Then, the controller 12 determines whether to end a message displaying process (Step S112). For example, by determining whether a predetermined time elapses after a message is previously output, the controller 12 performs the determination of Step S112. The controller 12 may perform the determination of Step S112 by determining whether the motion of the object 20 as a destination indicated by the previously output message is completed.

When the determination result of Step S112 is positive (YES in Step S112), this routine ends. When the determination result of Step S112 is negative (NO in Step S112), the flow is returned to Step S100.

On the other hand, when the determiner 12E determines that both motions do not correspond to each other in Step S108 (NO in Step S108), the flow moves to Step S114. In Step S114, the updater 12F updates the previously output message acquired in Step S100 on the basis of the motion information of the object 20 detected in Step S106 (Step S114).

The output controller 12G controls the output unit 14 so as to output the updated message updated in Step S114 (Step S116).

At this time, it is preferable that the output controller 12G control the output unit 14 so as to output a message to promote the object 20 to call an attention from the time at which the message is output in Step S110. Specifically, it is preferable that the output controller 12G control the output unit 14 so as to output a message with a display for more emphasizing the message or with a larger sound volume in comparison with that at the time at which the message is output in Step S110. Examples of the display for emphasizing a message include blinking the message, adding a rim image to the message, and displaying the message in a color attracting more attention. An attention to the updated message can be attracted by this process. Accordingly, it is possible to enhance safety or to improve traffic efficiency. Then, the flow is returned to Step S100.

As described above, the information processing apparatus 10 according to this arrangement includes the first acquirer 12A, the second acquirer 12B, the detector 12D, the determiner 12E, and the updater 12F. The first acquirer 12A acquires a message previously output from a vehicle 18 (moving object). The detector 12D acquires surrounding information of the vehicle 18 (moving object). The detector 12D detects motion information indicating a motion of an object 20 as a destination of the message on the basis of the surrounding information. The determiner 12E determines whether the motion of the object 20 indicated by the motion information corresponds to the motion indicated by the message. The updater 12F updates the message on the basis of the detected motion information when it is determined that both motions do not correspond to each other.

In this way, in the information processing apparatus 10 according to this arrangement, when the motion indicated by the previously output message does not correspond to the motion of the object 20 as a destination of the message, the message is updated on the basis of the motion information indicating the motion of the object 20.

Accordingly, in the information processing apparatus 10 according to this arrangement, it is possible to update the message on the basis of the motion of the object 20 as a destination.

In the information processing apparatus 10 according to this arrangement, when the object 20 as a destination does not make the motion indicated by the previously output message, the message can be updated to a message indicating the motion of the object 20.

When it is determined that both motions do not correspond to each other, the updater 12F updates the message to avoid at least one of collision of the object 20 and the vehicle 18 (moving object) and stopping of both the object 20 and the vehicle 18 (moving object) on the basis of the motion of the object 20 indicated by the detected motion information.

In this way, in the information processing apparatus 10 according to this arrangement, when the motion of the object 20 as a destination after a message is previously output does not correspond to the motion indicated by the message, the message is updated to avoid at least one of collision of the object 20 and the vehicle 18 and stopping of both.

Accordingly, in the information processing apparatus 10 according to this arrangement, in addition to the above-mentioned advantages, it is possible to avoid a dangerous situation in which the vehicle 18 and the object 20 simultaneously enter a crossroad or a state in which both the vehicle 18 and the object 20 stop their motions.

In this arrangement, a message is notified to the object 20 as a destination by outputting the message from the output unit 14. Accordingly, even when the object 20 as a destination does not have a communication function of communicating with the information processing apparatus 10 or the vehicle 18, it is possible to notify a message to the object 20.

In this arrangement, it is described that the information processing apparatus 10 includes the sensor 16, the output unit 14, and the controller 12. It is described that the information processing apparatus 10 is mounted on the vehicle 18 (moving object).

However, the information processing apparatus 10 has only to include at least the controller 12. In the information processing apparatus 10, at least one of the controller 12, the output unit 14, and the sensor 16 may be configured as an independent body as an example.

For example, the controller 12 may be mounted on a server device or the like which is disposed outside the vehicle 18. The sensor 16 and the output unit 14 may be mounted on the vehicle 18. The sensor 16 and the output unit 14 can communicate with the controller 12 by radio communication or the like. The sensor 16 may not be mounted on the vehicle 18. Monitoring cameras or various sensors which are installed outside buildings, signals, or the like may be made to serve as the sensor 16.

### Second Arrangement

In this arrangement, a moving speed of a vehicle 18 will be changed on the basis of a determination result of the determiner 12E.

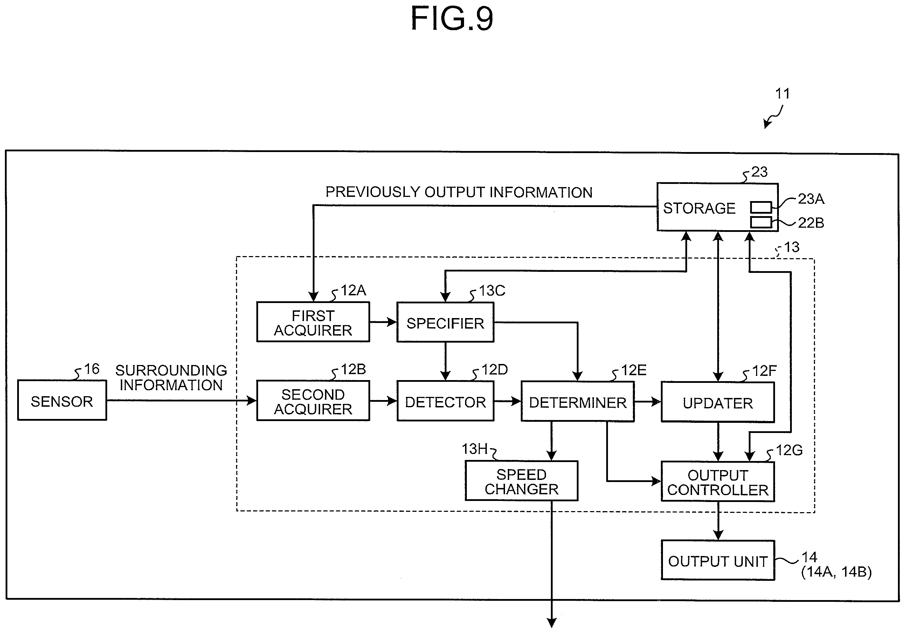

FIG. 9 is a block diagram illustrating an example of a functional configuration of an information processing apparatus 11 according to this arrangement.

The information processing apparatus 11 includes a controller 13, a storage 23, an output unit 14, and a sensor 16. The storage 23, the output unit 14, and the sensor 16 are connected to the controller 13 so as to transmit and receive data or signals thereto and therefrom. The output unit 14 and the sensor 16 are the same as described in the first arrangement.

The storage 23 stores a variety of data. In this arrangement, the storage 23 stores message management information 23A and previous output information 22B. The previous output information 22B is the same as described in the first arrangement.

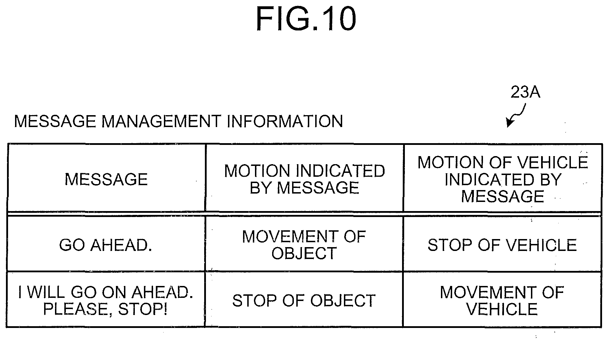

FIG. 10 is a schematic diagram illustrating an example of a data structure of the message management information 23A. In the message management information 23A, a message and a motion indicated by the message are correlated with each other. In the message management information 23A, a motion of an object 20 and a motion of a vehicle 18 are registered as a motion indicated by a message.

Examples of the message include "Go ahead" and "I will go on ahead. Please, stop".

A motion indicated by a message is information indicating a motion of an object 20 indicated by the corresponding message. Specifically, the motion of the object 20 indicated by a message is a motion indicating movement or stop of the object 20. On the other hand, the motion of the vehicle 18 indicated by the message is information indicating the motion of the vehicle 18 indicated by the corresponding message. Specifically, the motion of the vehicle 18 indicated by the message is a motion indicating movement or stop of the vehicle 18. The motion of the vehicle 18 indicated by the message has only to be a motion capable of avoiding collision of the object 20 and the vehicle 18 and stopping of both the object 20 and the vehicle 18 when the object 20 makes the motion corresponding to the motion of the object 20 indicated by the corresponding message.

For example, a motion of the object 20 indicated by the message "Go ahead" is "movement of the object 20" and a motion of the vehicle 18 is "stop of the vehicle 18". For example, a motion of the object 20 indicated by the message "I will go on ahead. Please, stop" is "stop of the object 20" and a motion of the vehicle 18 is "movement of the vehicle 18". In this way, the motions of the object 20 and the vehicle 18 indicated by the same message are registered to be motions opposite to each other.

The messages illustrated in FIG. 10 and the motions of the object 20 and the vehicle 18 indicated by the messages are merely examples and are not limited to the examples illustrated in FIG. 10.

The controller 13 includes a first acquirer 12A, a second acquirer 12B, a specifier 13C, a detector 12D, a determiner 12E, an updater 12F, an output controller 12G, and a speed changer 13H. A part or all of the first acquirer 12A, the second acquirer 12B, the specifier 13C, the detector 12D, the determiner 12E, the updater 12F, the output controller 12G, and the speed changer 13H may be embodied by causing a processor such as a CPU to execute a program, that is, by software, may be embodied by hardware such as an integrated circuit (IC), or may be embodied by use of both software and hardware.

The first acquirer 12A, the second acquirer 12B, the detector 12D, the determiner 12E, the updater 12F, and the output controller 12G are the same as described in the first arrangement. That is, in this arrangement, the controller 13 further includes the speed changer 13H in addition to the configuration of the controller 12 described in the first arrangement. The controller 13 includes the specifier 13C instead of the specifier 12C in the controller 12.

The specifier 13C specifies the motion of the object 20 indicated by the message acquired by the first acquirer 12A, similarly to the specifier 12C in the first arrangement. Similarly to the specifier 12C in the first arrangement, the specifier 13C extracts the feature information of the object 20 as a destination of the message acquired by the first acquirer 12A. In this arrangement, the specifier 13C additionally specifies the motion of the vehicle 18 indicated by the message.

For example, the specifier 13C specifies the previously output message acquired by the first acquirer 12A from the message management information 23A stored in the storage 23. The specifier 13C reads the motion of the object 20 indicated by a message corresponding to the specified message and the motion of the vehicle 18 indicated by the message from the message management information 23A. By this reading process, the specifier 13C can specify such motions.

When the determiner 12E determines that both motions do not correspond to each other, the speed changer 13H changes a moving speed of the vehicle 18 (moving object). Specifically, when it is determined that both motions do not correspond to each other, the speed changer 13H decreases the moving speed of the vehicle 18 (moving object) or stops the vehicle 18.

Specifically, the speed changer 13H outputs a control signal for decreasing the moving speed of the vehicle 18 or stopping the vehicle 18 to the vehicle controller of the vehicle 18. The vehicle controller of the vehicle 18 decreases the moving speed of the vehicle 18 or stops the vehicle 18 when the control signal is received.

For example, it is assumed that the previously output message is "Go ahead" and the motion indicated by the message is "movement of the object 20". It is assumed that the determiner 12E determines that both motions do not correspond to each other. In this case, the object 20 does not move, that is, stops.

The speed changer 13H changes the moving speed of the vehicle 18 so as to decelerate or stop the vehicle 18.

Similarly to the first arrangement, for example, the updater 12F updates the previously output message to a message indicating that the motion indicated by the message is "movement of the vehicle 18 (that is, stop of the object 20)". For example, the updater 12F updates the previously output message "Go ahead" to "I will go on ahead. Please, stop!".

Accordingly, in the information processing apparatus 11 according to this arrangement, when the determiner 12E determines that both motions do not correspond to each other, it is possible to secure safety by decreasing the moving speed of the vehicle 18 or stopping the vehicle and then to output the updated message.

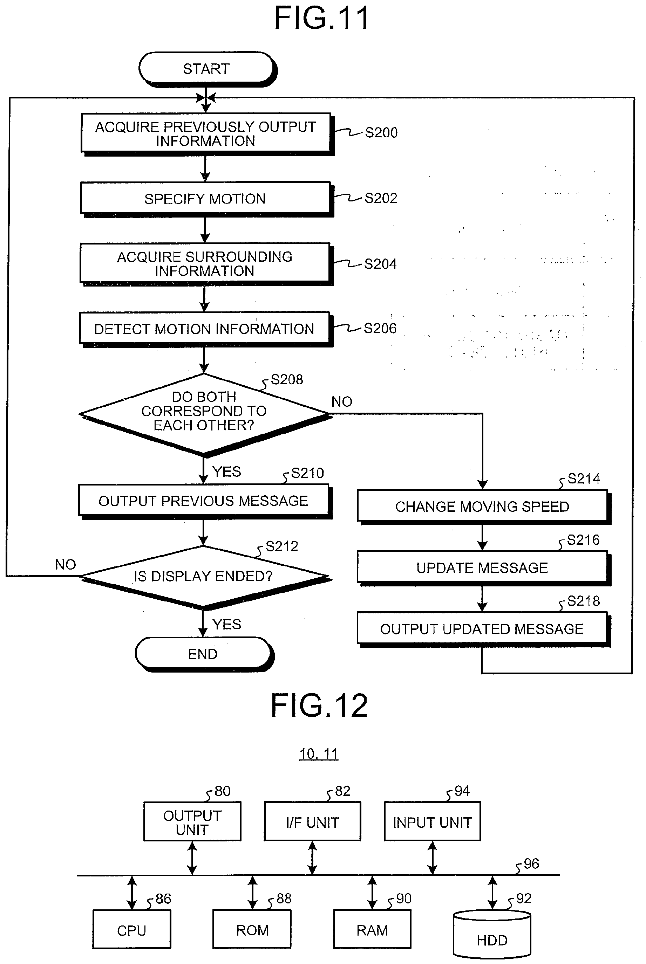

An example of an information processing flow which is performed by the controller 13 of the information processing apparatus 11 will be described below. FIG. 11 is a flowchart illustrating an example of the information processing flow which is performed by the controller 13 of the information processing apparatus 11.

First, the first acquirer 12A acquires previous output information (Step S200). By the process of Step S200, the first acquirer 12A acquires a previously output message.

Then, the specifier 13C specifies a motion of an object 20 indicated by the message acquired in Step S200 (Step S202). In Step S202, the specifier 13C extracts feature information of the object 20 as a destination of the message acquired in Step S200. In addition, the specifier 13C specifies a motion of a vehicle 18 indicated by the message acquired in Step S200.

Then, the second acquirer 12B acquires surrounding information of the vehicle 18 from the sensor 16 (Step S204).

Then, the detector 12D detects motion information indicating the motion of the object 20 as a destination of the message acquired in Step S200 on the basis of the surrounding information acquired in Step S204 (Step S206).

Then, the determiner 12E determines whether the motion of the object 20 indicated by the motion information detected in Step S206 corresponds to the motion indicated by the previously output message acquired in Step S200 (Step S208).

When it is determined in Step S208 that both motions correspond to each other (YES in Step S208), the flow moves to Step S210. In Step S210, the output controller 12G controls the output unit 14 so as to output the previously output message (Step S210).

Then, the controller 13 determines whether to end a message displaying process (Step S212). The determination of Step S212 can be performed in the same way as the determination of Step S112 (see FIG. 8).

When the determination result of Step S212 is positive (YES in Step S212), the speed changer 13H controls the vehicle controller of the vehicle 18 so as to continue to make the motion of the vehicle 18 indicated by the message acquired in Step S202 and ends this routine. When the determination result of Step S212 is negative (NO in Step S212), the flow is returned to Step S200.

On the other hand, when the determiner 12E determines that both motions do not correspond to each other in Step S208 (NO in Step S208), the flow moves to Step S214.

In Step S214, the speed changer 13H changes the moving speed of the vehicle 18 (Step S214). As described above, in this arrangement, the speed changer 13H changes the moving speed of the vehicle 18 to decelerate or stop the vehicle 18.

Then, the updater 12F updates the previously output message acquired in Step S200 on the basis of the motion information of the object 20 detected in Step S206 (Step S216). The output controller 12G controls the output unit 14 so as to output the updated message which is updated in Step S216 (Step S218). Then, the flow is returned to step S200.

As described above, in the information processing apparatus 11 according to this arrangement, when the determiner 12E determines that both motions do not correspond to each other, the speed changer 13H changes the moving speed of the vehicle 18 (moving object). Specifically, the speed changer 13H decreases the moving speed of the vehicle 18 or stops the vehicle. Accordingly, in this arrangement, in addition to the advantages of the first arrangement, it is possible to secure safety by causing the speed changer 13H to change the moving speed of the vehicle 18 and then to output the updated message.

A hardware configuration of the information processing apparatus 10 and the information processing apparatus 11 according to the above-mentioned arrangements will be described below. FIG. 12 is a block diagram illustrating an example of a hardware configuration of the information processing apparatus 10 and the information processing apparatus 11 according to the above-mentioned arrangements and modifications.

The information processing apparatus 10 and the information processing apparatus 11 according to the above-mentioned arrangements have a hardware configuration in which an output unit 80, an I/F unit 82, an input unit 94, a CPU 86, a read only memory (ROM) 88, a random access memory (RAM) 90, and an HDD 92 are connected to each other via a bus 96 and which uses a general computer.

The CPU 86 is an arithmetic operation device that controls processes which are performed by the information processing apparatus 10 and the information processing apparatus 11 according to the above-mentioned arrangements. The RAM 90 stores data required for various processes of the CPU 86. The ROM 88 stores programs for embodying various processes of the CPU 86. The HDD 92 stores data which are stored in the storage 22 and the storage 23. The I/F unit 82 is an interface for transmitting and receiving data to and from another apparatus. The output unit 80 corresponds to the above-mentioned output unit 14. The input unit 94 receives an operation instruction from a user or acquires data.

Programs for embodying various processes which are performed by the information processing apparatus 10 and the information processing apparatus 11 according to the above-mentioned arrangements are stored in the ROM 88 or the like in advance and are provided.

The programs which are executed by the information processing apparatus 10 and the information processing apparatus 11 according to the above-mentioned arrangements may be recorded on a computer-readable recording medium, which may be provided as a computer program product, such as a CD-ROM, a flexible disk (FD), a CD-R, or a digital versatile disk (DVD) in a file having a format which can be installed and executed in such apparatuses and may be provided.

The programs which are executed by the information processing apparatus 10 and the information processing apparatus 11 according to the above-mentioned arrangements may be stored in a computer connected to a network such as the Internet and may be provided by downloading the programs via the network. The programs for embodying the processes in the information processing apparatus 10 and the information processing apparatus 11 according to the above-mentioned arrangements may be provided or distributed via a network such as the Internet.

The programs for embodying the processes which are performed by the information processing apparatus 10 and the information processing apparatus 11 according to the above-mentioned arrangements are configured to generate the above-mentioned units in a main storage device.

A variety of information stored in the HDD 92 may be stored in an external device. In this case, the external device and the CPU 86 can be connected to each other via a network or the like.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

Example 1. An information processing apparatus includes a first acquirer, a second acquirer, a detector, a determiner, and an updater. The first acquirer is configured to acquire a previous output message from a moving object. The second acquirer is configured to acquire surrounding information of the moving object. The detector is configured to detect motion information indicating a motion of an object as a destination of the message based on the surrounding information. The determiner is configured to determine whether the motion of the object indicated by the motion information corresponds to a motion indicated by the message. The updater is configured to update the message based on the motion information when the motion of the object indicated by the motion information is determined not to correspond to the motion indicated by the message.

Example 2. In the information processing apparatus according to Example 1, the updater updates the message to avoid at least one of collision of the object and the moving object and stopping of both the object and the moving object, depending on the motion of the object indicated by the motion information when the motion of the object indicated by the motion information is determined not to correspond to the motion indicated by the message.

Example 3. In the information processing apparatus according to Example 1, the motion indicated by the message is a motion indicating movement or stop of the moving object or the object.

Example 4. In the information processing apparatus according to Example 3, the updater updates the message to a message indicating that the moving object performs the motion of the object indicated by the previous output message when the motion indicated by the previous output message indicates movement or stop of the object and when the motion of the object indicated by the motion information is determined not to correspond to the motion indicated by the message.

Example 5. In the information processing apparatus according to Example 1, the motion indicated by the previous output message is a motion indicating movement of the object. The detector detects the motion information including moving distance information indicating a moving distance of the object. The determiner determines that the motion of the object indicated by the motion information corresponds to the motion indicated by the message when the moving distance indicated by the moving distance information is equal to or greater than a first threshold value.

Example 6. In the information processing apparatus according to Example 1, the motion indicated by the previous output message is a motion indicating stop of the object. The detector detects the motion information including moving distance information indicating a moving distance of the object. The determiner determines that the motion of the object indicated by the motion information corresponds to the motion indicated by the message when the moving distance indicated by the moving distance information is less than a first threshold value.

Example 7. In the information processing apparatus according to Example 1, the motion indicated by the previous output message is a motion indicating movement of the object. The detector detects the motion information including moving direction information indicating a moving direction of the object, and detects a scheduled moving path of the moving object. The determiner determines that the motion of the object indicated by the motion information corresponds to the motion indicated by the message when the moving direction indicated by the moving direction information crosses the scheduled moving path.

Example 8. In the information processing apparatus according to Example 1, the motion indicated by the previous output message is a motion indicating stop of the object. The detector detects the motion information including moving direction information indicating a moving direction of the object, and detects a scheduled moving path of the moving object. The determiner determines that the motion of the object indicated by the motion information corresponds to the motion indicated by the message when the moving direction indicated by the moving direction information does not cross the scheduled moving path.

Example 9. In the information processing apparatus according to Example 1, the detector detects the motion information including first direction information indicating a moving direction of the object and first speed information indicating a moving speed of the object, detects second direction information indicating a moving direction of the moving object and second speed information indicating a moving speed of the moving object, detects a first scheduled moving path when the object continuously moves in the moving direction indicated by the first direction information at the moving speed indicated by the first speed information, and detects a second scheduled moving path when the moving object continues to move in the moving direction indicated by the second direction information at the moving speed indicated by the second speed information. The determiner determines that the motion of the object indicated by the motion information corresponds to the motion indicated by the message when all distances between points constituting the first scheduled moving path and points constituting the second scheduled moving path which correspond to same timings are equal to or greater than a second threshold value.

Example 10. The information processing apparatus according to Example 1 further includes an output unit configured to output the message to an outside of the moving object.

Example 11. In the information processing apparatus according to Example 10, the output unit has at least one of a display function of displaying an image based on the message and a sound output function of outputting sound based on the message.

Example 12. In the information processing apparatus according to Example 1 further includes a speed changer configured to change a moving speed of the moving object when the motion of the object indicated by the motion information is determined not to correspond to the motion indicated by the message.

Example 13. An information processing method includes: acquiring a previous output message from a moving object; acquiring surrounding information of the moving object; detecting motion information indicating a motion of an object as a destination of the message based on the surrounding information; determining whether the motion of the object indicated by the motion information corresponds to a motion indicated by the message; and updating the message based on the motion information when the motion of the object indicated by the motion information is determined not to correspond to the motion indicated by the message.

Example 14. In the information processing method according to Example 13, updating of the message updates the message to avoid at least one of collision of the object and the moving object and stopping of both the object and the moving object, depending on the motion of the object indicated by the motion information when the motion of the object indicated by the motion information is determined not to correspond to the motion indicated by the message.

Example 15. In the information processing method according to Example 13, the motion indicated by the message is a motion indicating movement or stop of the moving object or the object.

Example 16. In the information processing method according to Example 15, updating of the message updates the message to a message indicating that the moving object performs the motion of the object indicated by the previous output message when the motion indicated by the previous output message indicates movement or stop of the object and when the motion of the object indicated by the motion information is determined not to correspond to the motion indicated by the message.

Example 17. In the information processing method according to Example 13, the motion indicated by the previous output message is a motion indicating movement of the object. The information processing method further includes: detecting the motion information including moving distance information indicating a moving distance of the object, and determining that the motion of the object indicated by the motion information corresponds to the motion indicated by the message when the moving distance indicated by the moving distance information is equal to or greater than a first threshold value.

Example 18. In the information processing method according to Example 13, the motion indicated by the previous output message is a motion indicating stop of the object. The information processing method further includes: detecting the motion information including moving distance information indicating a moving distance of the object, and determining that the motion of the object indicated by the motion information corresponds to the motion indicated by the message when the moving distance indicated by the moving distance information is less than a first threshold value.

Example 19. In the information processing method according to Example 13, the motion indicated by the previous output message is a motion indicating movement of the object. The information processing method further includes: detecting the motion information including moving direction information indicating a moving direction of the object, detecting a scheduled moving path of the moving object, and determining that the motion of the object indicated by the motion information corresponds to the motion indicated by the message when the moving direction indicated by the moving direction information crosses the scheduled moving path.

Example 20. A computer-readable medium includes instructions which, when executed by a computer, cause the computer to perform: acquiring a previous output message from a moving object; acquiring surrounding information of the moving object; detecting motion information indicating a motion of an object as a destination of the message based on the surrounding information; determining whether the motion of the object indicated by the motion information corresponds to a motion indicated by the message; and updating the message based on the motion information when the motion of the object indicated by the motion information is determined not to correspond to the motion indicated by the message.

## Claims

1. An information processing apparatus (10; 11) comprising:
a first acquirer (12A) configured to acquire a previous output message from a moving object (18);
a second acquirer (12B) configured to acquire surrounding information of the moving object (18);
a detector (12D) configured to detect motion information indicating a motion of an object (20) as a destination of the message based on the surrounding information;
a determiner (12E) configured to determine whether the motion of the object (20) indicated by the motion information corresponds to a motion indicated by the message; and
an updater (12F) configured to update the message based on the motion information when the motion of the object (20) indicated by the motion information is determined not to correspond to the motion indicated by the message.

2. The information processing apparatus (10) according to claim 1, wherein the updater (12F) updates the message to avoid at least one of collision of the object (20) and the moving object (18) and stopping of both the object (20) and the moving object (18), depending on the motion of the object (20) indicated by the motion information when the motion of the object indicated by the motion information is determined not to correspond to the motion indicated by the message.

3. The information processing apparatus (10) according to claim 1, wherein the motion indicated by the message is a motion indicating movement or stop of the moving object (18) or the object (10).

4. The information processing apparatus (10) according to claim 3, wherein the updater (12F) updates the message to a message indicating that the moving object (18) performs the motion of the object (20) indicated by the previous output message when the motion indicated by the previous output message indicates movement or stop of the object (20) and when the motion of the object (20) indicated by the motion information is determined not to correspond to the motion indicated by the message.

5. The information processing apparatus (10) according to claim 1, wherein
the motion indicated by the previous output message is a motion indicating movement of the object (20), and
the detector (12D) detects the motion information including moving distance information indicating a moving distance of the object (20), and
the determiner (12E) determines that the motion of the object (20) indicated by the motion information corresponds to the motion indicated by the message when the moving distance indicated by the moving distance information is equal to or greater than a first threshold value.

6. The information processing apparatus (10) according to claim 1, wherein
the motion indicated by the previous output message is a motion indicating stop of the object (20), and
the detector (12D) detects the motion information including moving distance information indicating a moving distance of the object (20), and
the determiner (12E) determines that the motion of the object (20) indicated by the motion information corresponds to the motion indicated by the message when the moving distance indicated by the moving distance information is less than a first threshold value.

7. The information processing apparatus (10) according to claim 1, wherein
the motion indicated by the previous output message is a motion indicating movement of the object (20), and
the detector (12D) detects the motion information including moving direction information indicating a moving direction of the object (20), and detects a scheduled moving path of the moving object (18), and
the determiner (12E) determines that the motion of the object (20) indicated by the motion information corresponds to the motion indicated by the message when the moving direction indicated by the moving direction information crosses the scheduled moving path.

8. The information processing apparatus (10) according to claim 1, wherein
the motion indicated by the previous output message is a motion indicating stop of the object (20),
the detector (12D) detects the motion information including moving direction information indicating a moving direction of the object (20), and detects a scheduled moving path of the moving object (18), and
the determiner (12E) determines that the motion of the object (20) indicated by the motion information corresponds to the motion indicated by the message when the moving direction indicated by the moving direction information does not cross the scheduled moving path.

9. The information processing apparatus (10) according to claim 1, wherein
the detector (12D) detects the motion information including first direction information indicating a moving direction of the object (20) and first speed information indicating a moving speed of the object (20), detects second direction information indicating a moving direction of the moving object (18) and second speed information indicating a moving speed of the moving object (18), detects a first scheduled moving path when the object (20) continuously moves in the moving direction indicated by the first direction information at the moving speed indicated by the first speed information, and detects a second scheduled moving path when the moving object (18) continues to move in the moving direction indicated by the second direction information at the moving speed indicated by the second speed information, and
the determiner (12E) determines that the motion of the object (20) indicated by the motion information corresponds to the motion indicated by the message when all distances between points constituting the first scheduled moving path and points constituting the second scheduled moving path which correspond to same timings are equal to or greater than a second threshold value.

10. The information processing apparatus (10; 11) according to claim 1, further comprising an output unit (14) configured to output the message to an outside of the moving object.

11. The information processing apparatus (10; 11) according to claim 10, wherein the output unit (14) has at least one of a display function of displaying an image based on the message and a sound output function of outputting sound based on the message.

12. The information processing apparatus (11), according to claim 1, further comprising a speed changer (13H) configured to change a moving speed of the moving object (18) when the motion of the object (20) indicated by the motion information is determined not to correspond to the motion indicated by the message.

13. An information processing method comprising:
acquiring a previous output message from a moving object (18) (S100);
acquiring surrounding information of the moving object (18) (S104);
detecting motion information indicating a motion of an object (20) as a destination of the message based on the surrounding information (S106);
determining whether the motion of the object (20) indicated by the motion information corresponds to a motion indicated by the message (S108); and
updating the message based on the motion information when the motion of the object (20) indicated by the motion information is determined not to correspond to the motion indicated by the message (S114).

14. A computer-readable medium comprising instructions which, when executed by a computer (10), cause the computer (10) to perform:
acquiring a previous output message from a moving object (18) (S100);
acquiring surrounding information of the moving object (18) (S104);
detecting motion information indicating a motion of an object (20) as a destination of the message based on the surrounding information (S106);
determining whether the motion of the object (20) indicated by the motion information corresponds to a motion indicated by the message (S108); and
updating the message based on the motion information when the motion of the object (20) indicated by the motion information is determined not to correspond to the motion indicated by the message (S114).
